# EUROPÄISCHE PATENTANMELDUNG

(11) **EP 2 937 192 A1**
(43) Veröffentlichungstag der Anmeldung: **28.10.2015**
(21) Anmeldenummer: 14192743.4
(22) Anmeldetag: 11.11.2014
(51) Int. Cl.: B27C 3/08, B27C 5/10, B27G 21/00, B23C 1/20, B28D 1/04, B24B 55/05

(54) **Stützelement für eine Gehäuseunterseite**

(30) Priorität: 24.03.2014 DE 102014004125
(71) Anmelder: Popp, Siegfried, 88074 Meckenbeuren (DE)
(72) Erfinder: Popp, Siegfried, 88074 Meckenbeuren (DE)
(74) Vertreter: Otten, Roth, Dobler & Partner

(57) **Zusammenfassung**

Die Erfindung betrifft ein Handarbeitsgerät (1), wobei das Handarbeitsgerät (1) einen Antriebsmotor (2), eine Frässcheibe (3), die mit dem Antriebsmotor (2) über eine Welle (8) verbunden ist, ein die Frässcheibe (3) umschließendes Gehäuse (4), welches eine dem Antriebsmotor (2) zugewandte Gehäuseoberseite (4a) und eine dem Antriebsmotor (2) abgewandte Gehäuseunterseite (4b) umfasst, und mindestens einen Führungsschlitten (5), der mit dem Gehäuses (4) verbunden ist, umfasst, wobei der Antriebsmotor (2) und damit die Frässcheibe (3) über den Führungsschlitten (5) derart in Richtung mindestens einer Austrittsöffnung für die Frässcheibe (3) an dem Gehäuse (4) verschiebbar ist, dass die Frässcheibe (3) zumindest teilweise aus dem Gehäuse (4) zur Durchführung einer Schneid- bzw. Fräsarbeit herausragt. Hierbei ist mindestens ein Stützelement (19) zwischen der Frässcheibe (3) und einer Innenfläche (20) der dem Antriebsmotor (2) abgewandten Gehäuseunterseite (4b) angeordnet.

## Beschreibung

Die Erfindung betrifft ein Handarbeitsgerät, insbesondere zum Durchtrennen und/oder Schleifen von Materialien zum Ausbau von im Mauerwerk eingebauten Fenstern und Türen oder dergleichen.

Handarbeitsgeräte der eingangs genannten Art sind aus dem Stand der Technik bekannt. Diese umfassen in der Regel einen Antriebsmotor sowie eine mit dem Antriebsmotor trieblich verbundene Frässcheibe, wobei die Frässcheibe in einem diese umschließenden Gehäuse angeordnet ist. Unterschiedliche Ausführungsformen derartiger Handarbeitsgeräte erlauben es, durch Andruck des Gehäuses an eine zu bearbeitende Fläche, die Frässcheibe aus dem Gehäuse herauszubewegen, sodass ein Schnitt bzw. eine Fräsarbeit durchgeführt werden kann. Üblicherweise wird diese Bewegung dadurch ermöglicht, dass mindestens ein Führungsschlitten auf dem Gehäuse derart angeordnet ist, dass über diesen das Gehäuse relativ zur Frässcheibe und damit zur diese mit dem Antriebsmotor verbindenden Antriebswelle bewegt werden kann.

Es existieren vorteilhafte Ausführungsformen derartiger Handarbeitsgeräte, welche zusätzlich zum Austritt der Frässcheibe an einer ersten Gehäuseseite die Möglichkeit umfassen, die Frässcheibe auch an einer weiteren Gehäuseseite und/oder an einer Gehäusediagonalen bzw. einer Gehäuseecke austreten zu lassen. Derartige Handarbeitsgeräte sind besonders vorteilhaft, wenn Ecken von Fensterleibungen oder dergleichen ausgeschnitten werden sollen, da auf diese Weise ein Einschnitt bis in die Ecke erfolgen kann.

Nachteilig an dem eingangs beschriebenen Handarbeitsgeräten ist, dass die Gehäuse, insbesondere die Gehäusewandung, welche dem Führungsschlitten und damit dem Motor abgewandt ist, und welche üblicherweise in Form einer Blechplatte ausgebildet ist, stets der beim Arbeiten mit dem Handarbeitsgerät auftretenden Anpresskraft ausgesetzt ist, und dadurch, je nach Oberflächenbeschaffenheit und Anwendungsfall, beim Schneidvorgang in Richtung der Frässcheibe deformiert wird. Bis zu einem gewissen Grad ist eine derartige Deformation unkritisch, jedoch zeigt sich in der Praxis, dass die Gehäuseunterseite (Bodenplatte) oft verbogen wird, oder Beschädigungen durch Kontakt mit der Frässcheibe oder Befestigungselementen im Schneidbetrieb auftreten.

Der Erfindung liegt daher die Aufgabe zugrunde, ein eingangs beschriebenes Handarbeitsgerät dahingehend zu verbessern, dass Probleme durch Beschädigung der Gehäuseunterseite bzw. Bodenplatte vermieden werden. Diese Aufgabe wird ausgehend vom Oberbegriff des Patentanspruchs 1 durch die kennzeichnenden Merkmale des Anspruchs 1 gelöst.

Vorteilhafte Weiterbildungen sowie zweckmäßige Ausgestaltungen sind in den abhängigen Ansprüchen angegeben.

Im Einzelnen betrifft die Erfindung ein Handarbeitsgerät, insbesondere zum Durchtrennen und/oder Schleifen von Materialien zum Ausbau von im Mauerwerk eingebauten Fenstern und Türen oder dergleichen umfassend:
- einen Antriebsmotor,
- eine Frässchreibe, die mit dem Antriebsmotor über eine Welle verbunden ist,
- ein die Frässcheibe umschließendes Gehäuse, welches einem dem Antriebsmotor zugewandte Gehäuseoberseite und eine dem Antriebsmotor abgewandte Gehäuseunterseite umfasst,
- mindestens einen Führungsschlitten, der mit dem Gehäuse verbunden ist,
- wobei der Antriebsmotor und damit die Frässcheibe über den Führungsschlitten derart in Richtung mindestens einer Austrittsöffnung für die Frässcheibe an dem Gehäuse verschiebbar ist, dass die Frässcheibe zumindest teilweise aus dem Gehäuse zur Durchführung einer Schneid- bzw. Fräsarbeit herausragt.

Die Erfindung ist dadurch gekennzeichnet, dass mindestens ein Stützelement zwischen Frässcheibe und einer Innenfläche der dem Antriebsmotor abgewandten Gehäuseunterseite angeordnet ist.

Die Anordnung eines Stützelements zwischen Frässcheibe und Gehäuseunterseite, welche auch als Bodenplatte bezeichnet wird, erlaubt es, beim Arbeiten mit dem Handarbeitsgerät auftretenden Deformationen des Gehäuses und insbesondere der Bodenplatte entgegenzuwirken, und die Bodenplatte zusätzlich, insbesondere an einem Punkt abzustützen, södass Beschädigungen insbesondere eine bleibende Verformung der Bodenplatte oder eine Kollision zwischen der laufenden Frässcheibe und der Bodenplatte bzw. Befestigungselementen vermieden werden.

In einer zweckmäßigen Weiterbildung ist vorgesehen, das Stützelement axial in Verlängerung der Welle auszubilden. Die Umlaufgeschwindigkeit der Frässcheibe ist axial in Verlängerung der Welle am geringsten. Auf diese Weise entsteht am Stützelement die geringste Fliehkrafteinwirkung bzw. Umfangsgeschwindigkeit und damit geringe Reibwerte, sodass entsprechende Belastungen weitestgehend unberücksichtigt bleiben können.

In einer überdies zweckmäßigen Ausgestaltung ist vorgesehen, dass das Stützelement beim Verschieben der Frässcheibe mit dieser mitbewegbar. Die Anordnung des Stützelements derart, dass es mit der Frässcheibe mitbewegbar, bietet den Vorteil, dass das Stützelement im Falle des Austritts der Frässcheibe aus dem Gehäuse nahe an die Gehäuseöffnung heranbewegt wird, und trotzdem kein hindurchtretendes Stützelement durch die Gehäusekante erforderlich wird. Das Stützergebnis wird dadurch optimiert, sodass die Verhinderung von Beschädigungen am Gehäuse, insbesondere an der Bodenplatte weiter verbessert wird.

Es ist überdies zweckmäßig, dass das Stützelement eine der Innenfläche der dem Antriebsmotor abgewandten Gehäuseunterseite zugewandte Oberfläche umfasst, welche im Betrieb des Handärbeitsgeräts an der Innenfläche gleitend reibt. Auf diese Weise wird erzielt, dass die Bodenplatte stets eine gewisse Stützung erfährt, und diese Stützung beim Austritt der Frässcheibe, also im Arbeitsbetrieb entsprechend Beschädigungen entgegen wirkt.

Es ist überdies ebenfalls vorgesehen, dass das Stützelement entsprechend einen Abstand minimalster Größenordnung, insbesondere< 1 mm, vorzugsweise < 0,5 mm zwischen seiner Oberfläche und der Innenfläche der Gehäuseseite aufweist. Auf diese Weise wird zwar eine geringe Deformation des Gehäuses in Kauf genommen, bevor die Wirkung des Stützelements eintritt, diese ist jedoch unerheblich und führt zu keinen bleibenden Beschädigungen. Dafür entsteht keine andauernde Reibung beim Betrieb des Handarbeitsgeräts, da das Stützelement erst aktiv wird, wenn eine gewisse Grunddeformation eintritt.

Es ist weiterhin zweckmäßig, dass das Stützelement mit einem Fußteil ausgebildet ist, wobei das Fußteil mit der Welle und/oder einem Spannelement für die Frässcheibe und/oder der Frässcheibe verbunden ist und insbesondere in dieses bzw. diese eingreift, wobei das Spannelement insbesondere als Spannmutter oder als Spannschraube ausgebildet ist und wobei das Stützelement im Betrieb drehfest gegenüber der Frässcheibe angeordnet ist, das heißt sich mit der Frässcheibe bzw. der Welle bzw. dem Spannelement im Betrieb mit dreht.
Üblicherweise werden derartige Frässcheiben mittels Gewindemuttern oder Schrauben in der Antriebswelle befestigt. Es sind auch andere, aus dem Stand der Technik bekannte Befestigungsarten möglich. Die entsprechenden Befestigungsarten haben gemeinsam, dass zentrisch, im Längsachsbereich der Antriebswelle, ein entsprechender verbindender Eingriff zwischen dem Spannelement und der Welle erfolgt, in welchem die Frässcheibe eingespannt ist. Im Rahmen dieser Befestigung kann das erfindungsgemäße Stützelement integriert, oder auf diese aufgesteckt werden.

Es ist überdies zweckmäßig, dass das Stützelement eine Pilzform oder Kugelkappenform oder Ringform oder Kegelform aufweist. Entsprechende Stützelemente lassen sich industriell leicht herstellen und bieten für den Einbau und/oder die Nachrüstung die größtmögliche Flexibilität und gewährleisten eine geringe Reibung zwischen Stützelement und Bodenplatte, wenn das sich im Betrieb drehende Stützelement an die Bodenplatte gedrückt wird oder gegenüber dieser unter Ausnutzung der Freiheitsgrade, welche der Führungsschlitten gibt, verschoben wird.

Weiterhin ist es zweckmäßig, dass das Stützelement auch an einer Innenfläche des Gehäuses, insbesondere als Stützstreifen entlang der Bewegungsbahnen der Frässcheibe, insbesondere des Mittelpunkts der Frässcheibe angeordnet ist. Die Anordnung entlang der Bewegungsbahn bzw. Bewegungsbahnen der Frässcheibe, also im Fall einer rein linear geführten Frässcheibe entlang der Axialbewegung Richtung Gehäuseaustritt oder im Fall einer diagonal geführten Frässcheibe entlang der entsprechenden Bewegungsbahnen oder im Fall einer L-förmig geführten Frässcheibe, ermöglicht es, auf eine Anordnung des Stützelements im Achsbereich zu verzichten, sodass eine entsprechende Abstützung am Gehäuse selbst erfolgt. Eine derartige Abstützung lässt sich bei vorhandenen Handarbeitsgeräten einfach nachrüsten, ohne dass das Stützelements jeweils in seiner Geometrie auf die jeweilige Befestigung für die Frässcheibe angepasst werden muss.

Die Erfindung betrifft insbesondere auch ein Handarbeitsgerät entsprechend dem Oberbegriff des Anspruchs 1, bei welchem das Stützelement derart ausgebildet ist, dass bei Austritt der Frässcheibe zur vorderen und/oder seitlichen Richtung aus dem Gehäuse, die Achse und die Bodenplatte des Gehäuses beim Ausbau von im Mauerwerk eingebauten Fenstern und Türen oder dergleichen gegeneinander abgestützt werden. Die Anordnung eines Stützelements zwischen Frässcheibe und Gehäuseunterseite, welche auch als Bodenplatte bezeichnet wird, erlaubt es, beim Arbeiten mit dem Handarbeitsgerät auftretenden Deformationen des Gehäuses und insbesondere der Bodenplatte entgegenzuwirken, und die Bodenplatte zusätzlich, insbesondere an einem Punkt abzustützen, sodass Beschädigungen insbesondere eine bleibende Verformung der Bodenplatte oder eine Kollision zwischen der laufenden Frässcheibe und der Bodenplatte vermieden werden.

Bei dem Handarbeitsgerät ist es vorgesehen, das Stützelement als einteiliges Stützelement auszubilden oder das Stützelement als zweiteiliges Stützelement auszubilden, welches einen Körper und einen Gleit- und Stützkörper umfasst, wobei der Gleit- und Stützkörper in einer Tasche des Körpers aufgenommen ist und über diesen hervorsteht und insbesondere als Kugel ausgebildet ist. Ein einteiliges Stützelement ist kostengünstig und einfach herstellbar. Ein zweiteiliges Stützelement lässt sich durch die Verwendung unterschiedlicher Werkstoffe hinsichtlich Montagefreundlichkeit durch einfaches Eindrücken und hinsichtlich Verschleiß- bzw. Gleiteigenschaften optimal ausbilden.

Weitere Einzelheiten der Erfindung werden in der Zeichnung anhand von schematisch dargestellten Ausführungsbeispielen beschreiben.

Hierbei zeigt:
- Figur 1:: einen horizontalen Schnitt durch eine erste Ausführungsvariante eines erfindungsgemäßen Handarbeitsgeräts entsprechend einer in der Figur 2 angedeuteten Schnittlinie I-I;
- Figur 2:: einen Querschnitt durch das in der Figur 1 gezeigte Handarbeitsgerät;
- Figur 3 und 4:: Längsschnitte durch das in der Figur 1 gezeigte Handarbeitsgerät, wobei die Frässcheibe in der Figur 3 in einer Ruhestellung steht und wobei die Frässcheibe in Figur 4 in einer Arbeitsstellung steht;
- Figur 5:: einen Längsschnitt durch eine zweite Ausführungsvariante eines erfindungsgemäßen Handarbeitsgeräts;
- Figur 6:: eine Schnittansicht des Gehäuses des in der Figur 5 gezeigten Handarbeitsgeräts entsprechend der in der Figur 5 gezeigten Schnittlinie IV-IV und
- Figur 7a, 7b:: eine geschnittene und eine ungeschnittene Seitenansicht eines weiteren Stützelements.

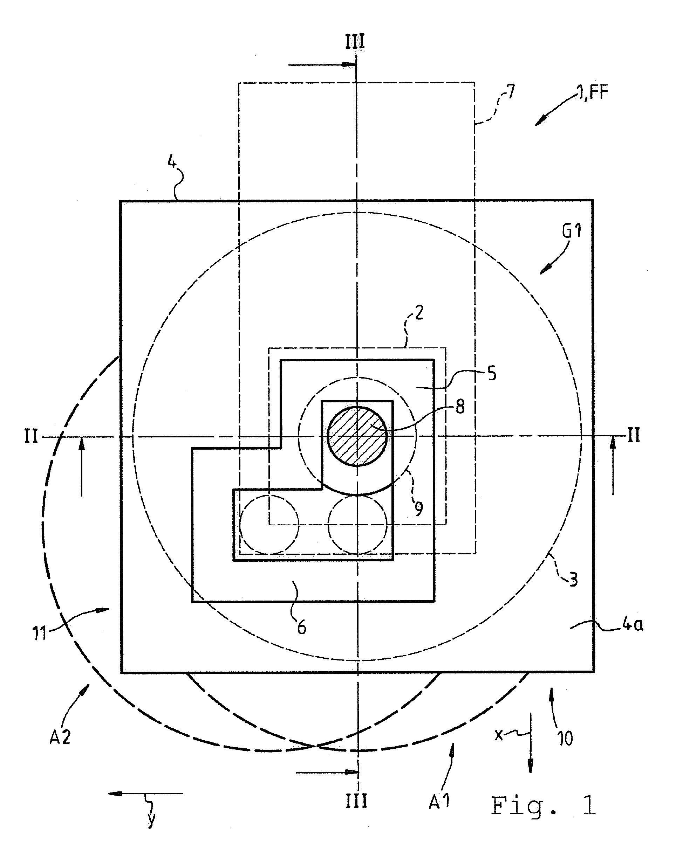

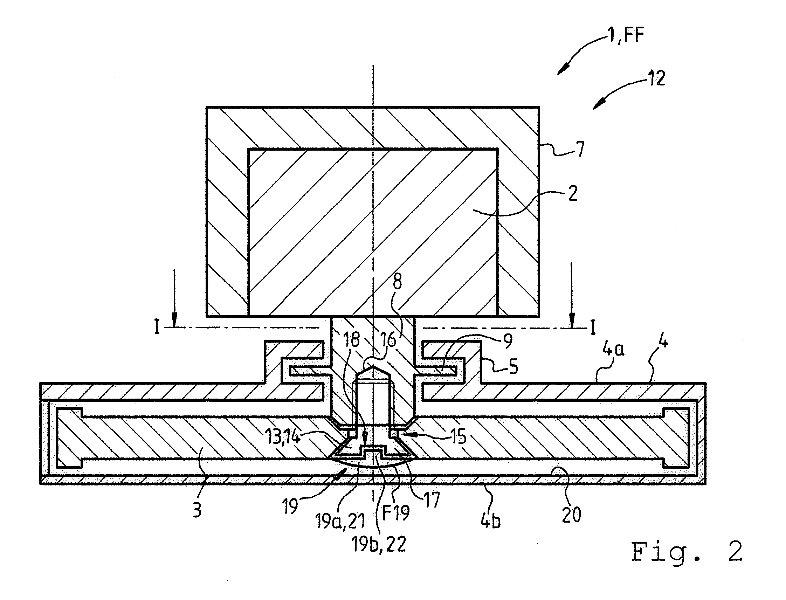

In der Figur 1 ist ein horizontaler Schnitt durch eine erste Ausführungsvariante eines erfindungsgemäßen Handarbeitsgeräts 1 entsprechend einer in der Figur 2 angedeuteten Schnittlinie I-I gezeigt. Komponenten des Handarbeitsgeräts 1, welche oberhalb der Schnittlinie I-I liegen, sind mit gestrichelten Linien angedeutet. Das Handarbeitsgerät 1, welches als sogenannte Fensterfräse FF ausgebildet ist, umfasst einen Antriebsmotor 2, eine Frässcheibe 3, ein die Frässcheibe 3 umschließendes Gehäuse 4, einen ersten Führungsschlitten 5, einen zweiten Führungsschlitten 6 und einen Griffkörper 7, in welchem der Antriebsmotor 2 aufgenommen ist. Der Antriebsmotor 2 umfasst eine Welle 8, über welche der Antriebsmotor 2 mit der Frässcheibe 5 drehfest verbunden ist. Das Gehäuse 4 umfasst eine dem Antriebsmotor 2 zugewandte Gehäuseoberseite 4a und eine dem Antriebsmotor 2 abgewandte Gehäuseunterseite 4b (siehe auch Figur 2), wobei die Gehäuseunterseite 4b auch als Bodenplatte bezeichnet wird. Die Welle 8 umfasst einen Kragen 9, mit welchem der Antriebsmotor 2 und der diesen umgebende Griffkörper 7 in den ineinander übergehenden Führungsschlitten 5 und 6 geführt ist. Das Gehäuse 4 umfasst eine erste Austrittsöffnung 10 und eine zweite Austrittsöffnung 11, durch welche die Frässcheibe 3 aus dem Gehäuse 4 austreten kann. In der Figur 1 sind eine Grundstellung G1, eine erste Arbeitsstellung A1 und eine zweite Arbeitsstellung A2 der Frässcheibe 3 gezeigt. Selbstverständlich wird die Frässcheibe 3 zusammen mit der Welle 8, dem Antriebsmotor 2 und dem Griffkörper 7 bewegt und in den Führungsschlitten 5 und 6 verfahren bzw. verschoben, wobei das Verfahren in der Zeichnungsebene der Figur 1 aus der Grundstellung G1, in welcher die Frässcheibe 3 dünngestrichelt gezeigt ist, zunächst in x-Richtung in die Arbeitsstellung A1 erfolgt. In der Arbeitsstellung A1 ist die Frässcheibe 3 außerhalb des Gehäuses 4 dickgestrichelt angedeutet. Aus der Abreitstellung A1 erlaubt der Führungsschlitten 6, in welchen der Führungsschlitten 5 übergeht, dann eine Verschiebung der Frässcheibe 3 in y-Richtung in die zweite Arbeitsstellung A2, in welcher die Frässcheibe 3 außerhalb des Gehäuses 4 ebenfalls dickgestrichelt angedeutet ist. Ebenso wie die Frässcheibe 3 ist auch die Welle 8 in den drei Stellungen G1, A1 und A2 gezeigt.

In der Figur 2 ist ein Querschnitt durch das in der Figur 1 gezeigte Handarbeitsgerät 1 entsprechend einer in der Figur 1 angedeuteten Schnittlinie II-II dargestellt. In diesem Querschnitt ist erkennbar wie eine den Antriebsmotor 2 mit seiner Welle 8, den Griffkörper 7 und die Frässcheibe 3 umfassende Verschiebeeinheit 12 gegenüber dem Gehäuse 4 und in dem mit dem Gehäuse 4 verbundenen Führungsschlitten 5 verschiebbar ist, wobei die Verschiebeeinheit 12 mit dem an der Welle 8 ausgebildeten Kragen 9 in dem Führungsschlitten 5 geführt wird. Selbstverständlich kann eine Führung der Verschiebeeinheit 12 in gleichwirkender Weise konstruktiv auch abweichend ausgeführt werden. Das Handarbeitsgerät 1 umfasst weiterhin ein Spannelement 13, mit welchen die Frässcheibe 3 drehfest mit der Welle 8 verbunden ist. Hierbei ist das Spannelement 13 als Spannschraube 14 ausgebildet, welche durch eine Bohrung 15 in der Frässcheibe 3 hindurch in ein in der Welle 8 ausgeführtes Innengewinde 16 derart eingeschraubt ist, dass die Frässcheibe 3 von einem Kopf 17 der Spannschraube 14 gegen die Welle 8 gepresst wird. Zur Betätigung der Spannschraube 14 weist deren Kopf 17 eine auf einen nicht dargestellten Steckschlüssel angepasste Ausnehmung 18 auf. Das Handarbeitsgerät 1 umfasst weiterhin ein Stützelement 19, welches zwischen der Frässcheibe 3 und einer Innenfläche 20 der Gehäuseunterseite 4b des Gehäuses 4 angeordnet ist. Das Stützelement 19 umfasst einen Kopf 19a und einen Hals 19b, wobei der Kopf 19a als Kugelkappe 21 ausgebildet ist und eine Oberfläche F19 aufweist und wobei der mit dem Kopf 19a verbundene Hals 19b als stiftförmiges Fußteil 22 ausgebildet ist. Das Fußteil 22 ist hierbei bezüglich seiner Abmessungen und seiner Elastizität derart ausgebildet, dass dieses in die Ausnehmung 18 der Spannschraube 14 einsteckbar ist und in dieser unverlierbar gehalten ist.

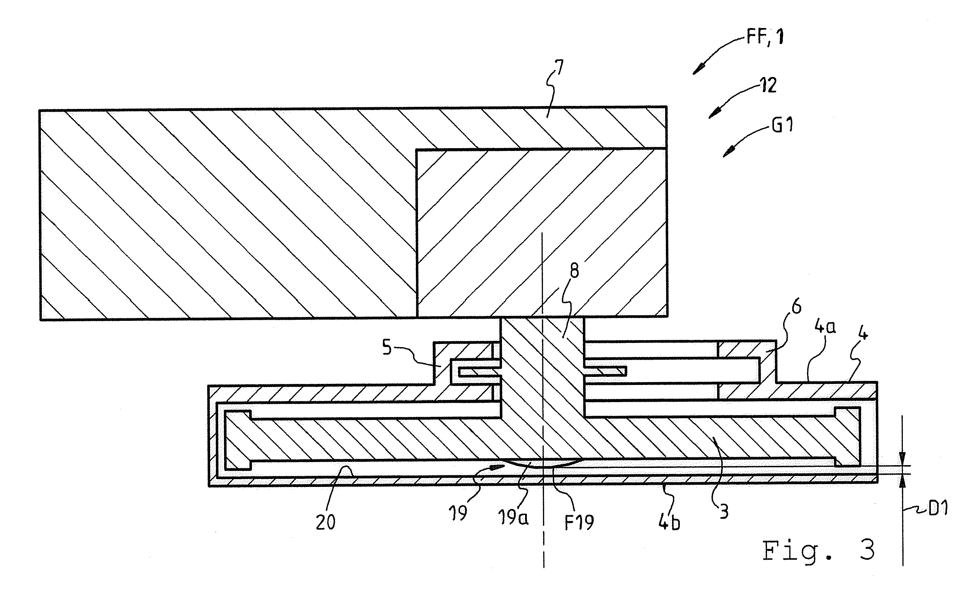

In der Figur 3 ist ein weiterer Schnitt durch das Handarbeitsgerät 1 gezeigt, wobei der Schnitt entsprechend einer in der Figur 1 angedeuteten Schnittlinie III-III ausgebildet ist und wobei die Welle 8, die Frässcheibe 3 und das Stützelement 19 unter Weglassung des Spannelements 13 vereinfacht dargestellt sind. Die Verschiebeeinheit 12 steht in der Figur 3 in der Grundstellung G1 und ist noch nicht durch Anpresskräfte belastet, welche ein Handwerker über den Griffkörper 7 im Arbeitseinsatz des Handarbeitsgeräts 1 ausübt. In der gezeigten unbelasteten Ruhestellung weist der Kopf 19a des Stützelements 19 mit seiner Oberfläche F19 einen Abstand D1 zu der Innenfläche 20 der Gehäuseunterseite 4b bzw. der Bodenplatte auf.

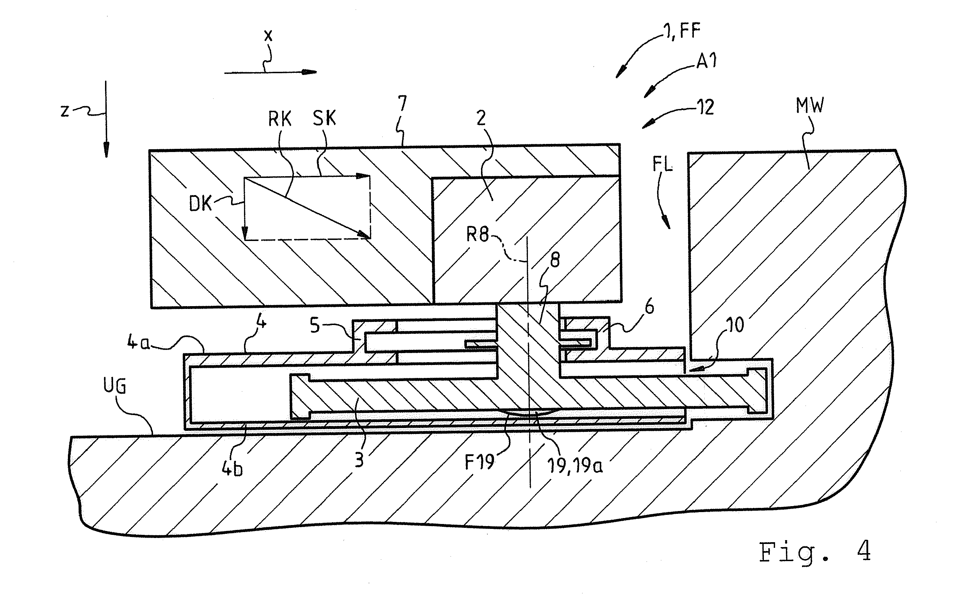

In der Figur 4 ist das Handarbeitsgerät 1 in gleicher Ansicht wie in der Figur 3 gezeigt. Dieses steht aber nicht mehr in der Grundstellung G1, sondern in der ersten Arbeitsstellung A1, das heißt die Verschiebeeinheit 12 ist in Pfeilrichtung x durch die Austrittsöffnung 10 aus dem Gehäuse 4 geschoben, wobei sich die Frässcheibe 3 beim Herausschieben in ein Mauerwerk MW im Bereich einer Fensterlaibung FL geschnitten hat. Hierzu übt der das Handarbeitsgerät 1 handhabende Handwerker im Wesentlichen eine Schubkraft SK und eine Druckkraft DK über den Griffkörper 7 auf die Verschiebeeinheit 12 aus. In Folge der einwirkenden Kräfte SK und DK, welche als resultierende Kraft RK wirken, treten nun leichte Verformungen einzelner oder mehrerer Komponenten des Handarbeitsgeräts 1 auf und/oder werden einzelne oder mehrere Komponenten des Handarbeitsgeräts 1 durch vorhandenes Spiel zueinander verschoben. Dieser komplexe Vorgang, welcher auch wesentlich von den einwirkenden Kräften und einem Untergrund UG, auf welchen der Grundkörper 4 mit seiner Gehäuseunterseite 4b bzw. seiner Bodenplatte aufgelegt wird, abhängt, ist in der Figur 4 schematisch derart dargestellt, dass die Verschiebeeinheit 12 durch Ausnutzung eines Spiels im Führungsschlitten 5, 6 durch die Einwirkenden Kräfte SK und DK gegenüber dem Gehäuse 4 in Pfeilrichtung z verschoben wird. Hierbei verhindert das Stützelements 19 mit seinem Kopf 19a, dass sich die Frässcheibe 3 der Innenfläche 20 Gehäuseunterseite 4b zu weit nähert, wobei das Stützelement 19 mit der Oberfläche F19 seines Kopfs 19a die Gehäuseunterseite 4b bzw. die Bodenplatte an ihrer Innenfläche 20 abstützt, so dass diese nicht zu stark und insbesondere nicht bleibend verformt wird. Im Kontakt mit der Innenfläche 20 der Gehäuseunterseite 4b gleitet das Stützelement 19 mit seiner Oberfläche F19 drehend auf der Innenfläche 20 um eine Rotationsachse R8 der Welle 8 bzw. der Frässcheibe 3, so dass ein Verschleiß durch Reibung auf ein Minimum reduziert ist. Das Stützelement 19 entfaltete seine stabilisierende Wirkung selbstverständlich bei entsprechender Belastung des Handarbeitsgeräts 1 auch, auf dem Weg der Frässcheibe 3 aus der Grundstellung G1 in die erste Arbeitsstellung A1 und auf dem Wege der Frässcheibe 3 von der ersten Arbeitsstellung A1 in die zweite Arbeitsstellung A2 und in der zweiten Arbeitsstellung A2 sowie beim Zurückziehen der Frässcheibe 3 in die Grundstellung G1.

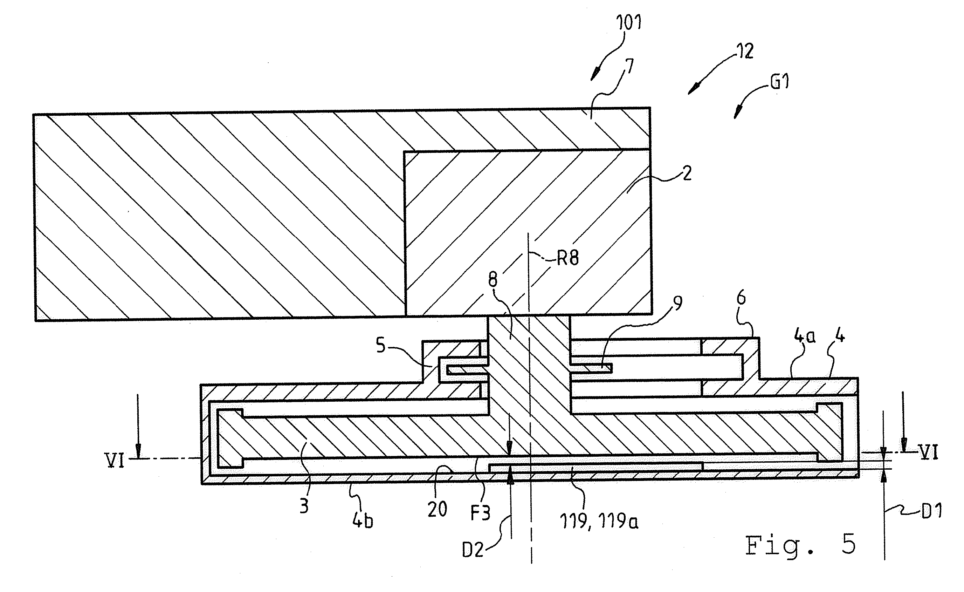

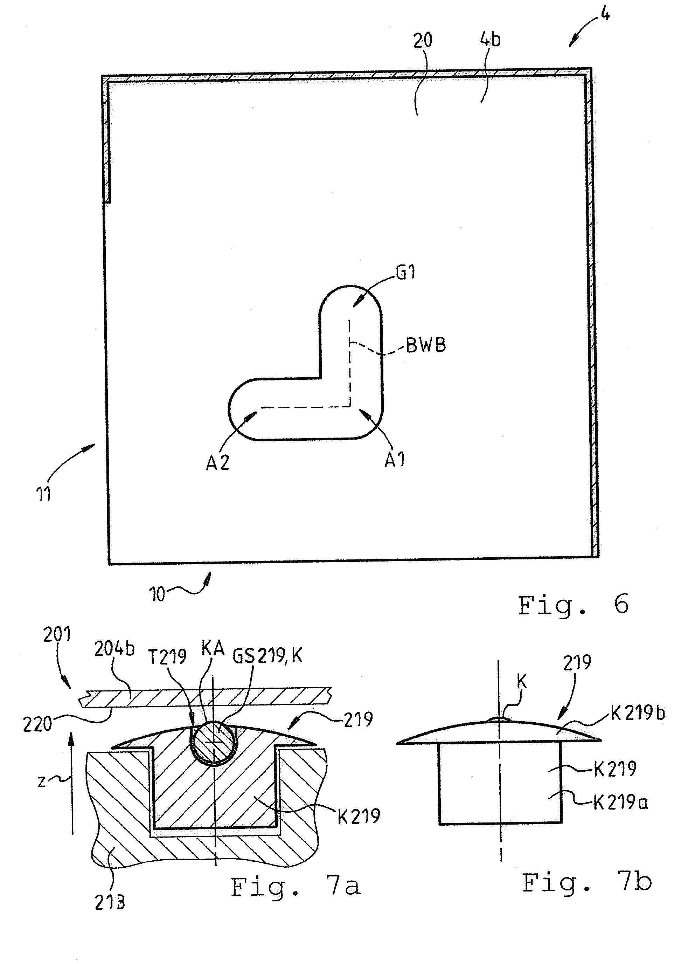

In der Figur 5 ist in Analogie zu der Figur 3 ein Längsschnitt durch eine zweite Ausführungsvariante eines erfindungsgemäßen Handarbeitsgeräts 101 gezeigt. Grundsätzlich weist das Handarbeitsgerät 101 die gleichen Komponenten und Funktionen wie das in den Figuren 1 bis 4 beschrieben Handarbeitsgerät auf. Insofern wird ausdrücklich auf die Beschreibung zu diesen Figuren verwiesen und insofern ist die Figur 5 auch mit den dort genannten Bezugszeichen beschriftet. Im Unterschied zu der in den Figuren 1 bis 4 gezeigten Ausführungsvariante umfasst die in den Figuren 5 und 6 gezeigte Ausführungsvariante jedoch kein Stützelement mit Kopf und Hals, welches mit der Verschiebeeinheit 12 verbunden ist, sondern umfasst ein Stützelement 119, welches mit der Innenfläche 20 der Gehäuseunterseite 4b verbunden ist. Hierbei ist das Stützelement 119 als Stützsteifen 119a ausgebildet, welcher sich entlang einer L-förmigen Bewegungsbahn BWB (siehe Figur 6) der Rotationsachse R8 der Welle 8 erstreckt, auf welcher diese von der Grundstellung G1 über die erste Arbeitsstellung A1 in die zweite Arbeitsstellung A2 verschoben wird. Wie in der Figur 5 gezeigt weist die Schleifscheibe 3 mit einer der Innenfläche 20 der Gehäuseunterseite 4b zugewandten Oberfläche F3 im Bereich der Welle 8 in einer unbelastete Situation zu dem Stützelement 119 einen Abstand D2 auf, welcher sich bei entsprechender Belastung bzw. bei entsprechendem Untergrund unter der Gehäuseunterseite 4b ggf. soweit reduziert, dass die sich drehende Frässcheibe 3 unter Anlage ihrer Oberfläche F3 an dem Stützelement 119 gleitet und die Gehäuseunterseite 4b sich mit ihrer Innenfläche 20 an der Frässcheibe 3 gefahrlos abstützen kann.

In der Figur 6 ist ein Schnitt entsprechend einer in der Figur 5 angedeuteten Schnittlinie VI-VI durch das Gehäuse 4 gezeigt, wobei die Frässcheibe nicht dargestellt ist. In der Draufsicht auf die Innenfläche 20 der Gehäuseunterseite 4b, welche in der Schnittdarstellung frei gegeben ist, ist der L-förmige Verlauf des Stützelements 119 entlang der gestrichelt eingezeichneten Bewegungsbahn BWB erkennbar. Hierbei sind die Positionen, an welchen sich die Frässcheibe mit ihrem unter der Welle liegenden Bereich in der Grundstellung G1 und in den Arbeitsstellungen A1 und A2 befindet, mit Pfeilen bezeichnet.

In den Figuren 7a und 7b ist ein weiteres Stützelement 219 in Seitenansicht gezeigt. Das in der Figur 7a in geschnittener Seitenansicht gezeigte Stützelement 219 ist wie das in der Figur 2 gezeigte Stützelement dafür vorgesehen, in ein Spannelement 213, welches in der Figur 7a nur angedeutet ist, eingedrückt zu werden. Das Stützelement 219 ist zweiteilig ausgeführt und umfasst einen Körper K219 und einen Gleit- und Stützkörper GS219. Hierbei ist der Gleit- und Stützkörper GS219 als Kugel K ausgeführt, welche in einer in dem Körper K219 ausgebildeten Tasche T219 aufgenommen ist. Hierbei ist es gemäß der dargestellten Ausführungsvariante vorgesehen, dass der Gleit- und Stützkörper GS219 in die Tasche T219 eingeklebt ist und bei entsprechender Belastung eines in der Figur 7a unvollständig dargestellten Handarbeitsgeräts 201 mit einem über den Körper 219 in z-Richtung überstehenden Kugelabschnitt KA mit einer Innenfläche 220 einer Bodenplatte 204b des Handarbeitsgeräts 201 in Kontakt kommt. Gemäß nicht einer nicht dargestellten Ausführungsvariante ist es vorgesehen, die Kugel drehbar in der Tasche zu lagern, wobei die Tasche die Kugel derart umgreift, dass diese in der Tasche unverlierbar aufgenommen ist. Die Figur 7b zeigt das in der Figur 7a dargestellte Stützelement 219 in ungeschnittener Seitenansicht der Körper K219 setzt sich aus einem zylindrischen Abschnitt K219a und einen den zylindrischen Abschnitt K219a kappenförmig überragenden Kappenabschnitt K219b zusammen. Die Kugel K steht über den Kappenabschnitt K219b über.

Es ist vorgesehen, das einteilige Stützelement 19 bzw. 119 bzw. den Körper K219 des zweiteiligen Stützelements 219 aus einem verschließfesten und gleitfähigen Kunststoff auszubilden. Ein geeigneter Kunststoff ist der von der Firma Murtfelder vertriebene Kunststoff S-grün.

### Bezugszeichenliste:

- 1: Handarbeitsgerät
- 2: Antriebsmotor
- 3: Frässcheibe
- 4: Gehäuse
- 4a: Gehäuseoberseite
- 4b: Gehäuseunterseite, Bodenplatte
- 5: erster Führungsschlitten
- 6: zweiter Führungsschlitten
- 7: Griffkörper
- 8: Welle
- 9: Kragen von 8
- 10: erste Austrittsöffnung von 4
- 11: zweite Austrittsöffnung von 4
- 12: Verschiebeeinheit
- 13: Spannelement
- 14: Spannschraube
- 15: Bohrung in 3
- 16: Innengewinde in 8
- 17: Kopf von 14
- 18: Ausnehmung in 17
- 19: Stützelement
- 19a: Kopf von 19
- 19b: Hals von 19
- 20: Innenfläche von 4b
- 21: Kugelkappe
- 22: Fußteil

- 101: Handarbeitsgeräts
- 119: Stützelement von 101
- 119a: Stützsteifen

- 201: Handarbeitsgeräts 201
- 204b: Bodenplatte 204b
- 213: Spannelement 213
- 219: Stützelement 219
- 220: Innenfläche 220

- A1: erste Arbeitsstellung von 12 bzw. 3
- A2: zweite Arbeitsstellung von 12 bzw. 3
- BWB: L-förmigen Bewegungsbahn
- DK: Druckkraft
- D1: Abstand wischen 20 und 19a
- D2: Abstand zwischen 119 und 3
- FF: Fensterfräse
- FL: Fensterlaibung
- F3: Oberfläche von 3
- F19: Oberfläche von 19
- G1: Grundstellung von 12 bzw. 3
- GS219: Gleit- und Stützkörper von 219
- K: Kugel K
- KA: Kugelabschnitt von K
- K219: Körper von 219
- K219a: zylindrischen Abschnitt von K219
- K219b: Kappenabschnitt von K219
- MW: Mauerwerk
- RK: resultierende Kraft
- R8: Rotationsachse von 8
- SK: Schubkraft
- T219: Tasche in K219
- UG: Untergrund
- x, y, z: Pfeilrichtung

## Patentansprüche

1. Handarbeitsgerät (1; 101), insbesondere zum Durchtrennen und/oder Schleifen von Materialien zum Ausbau von im Mauerwerk (MW) eingebauten Fenstern und Türen oder dergleichen, umfassend:
- einen Antriebsmotor (2)
- eine Frässcheibe (3), die mit dem Antriebsmotor (2) über eine Welle (8) verbunden ist,
- ein die Frässcheibe (3) umschließendes Gehäuse (4), welches eine dem Antriebsmotor (2) zugewandte Gehäuseoberseite (4a) und eine dem Antriebsmotor (2) abgewandte Gehäuseunterseite (4b) umfasst,
- mindestens einen Führungsschlitten (5; 6), der mit dem Gehäuses (4) verbunden ist,
- wobei der Antriebsmotor (2) und damit die Frässcheibe (3) über den Führungsschlitten (5; 6) derart in Richtung mindestens einer Austrittsöffnung (10; 11) für die Frässcheibe (3) an dem Gehäuse (4) verschiebbar ist, dass die Frässcheibe (3) zumindest teilweise aus dem Gehäuse (4) zur Durchführung einer Schneid- bzw. Fräsarbeit herausragt,
**dadurch gekennzeichnet,**
- **dass** mindestens ein Stützelement (19; 119) zwischen der Frässcheibe (3) und einer Innenfläche (20) der dem Antriebsmotor (2) abgewandten Gehäuseunterseite (4b) angeordnet ist.

2. Handarbeitsgerät nach Anspruch 1, **dadurch gekennzeichnet, dass** das Stützelement (19; 119) axial in Verlängerung der Welle (8) ausgebildet ist.

3. Handarbeitsgerät nach Anspruch 1 oder 2, **dadurch gekennzeichnet, dass** das Stützelement (19) beim Verschieben der Frässcheibe (3) mit dieser mitbewegbar.

4. Handarbeitsgerät nach einem der vorangegangenen Ansprüche, **dadurch gekennzeichnet, dass** das Stützelement (19) eine der Innenfläche (20) der Gehäuseunterseite (4b) zugewandte Oberfläche (F19) umfasst, welche im Betrieb des Handarbeitsgeräts (1; 101) insbesondere wenigstens zeitweise an der Innenfläche (20) gleitet.

5. Handarbeitsgerät nach einem der Ansprüche 1 bis 3, **dadurch gekennzeichnet, dass** das Stützelement (19) eine der Innenfläche (20) der Gehäuseunterseite (4b) zugewandte Oberfläche (F19) umfasst, welche im Betrieb des Handarbeitsgeräts (1; 101) einen Abstand (D1) zu der Innenfläche (20) aufweist, wobei der Abstand (D1) insbesondere kleiner als 1 mm, vorzugsweise kleiner als 0,5 mm ausgebildet ist und die Oberfläche (F19) insbesondere bei einer Deformation der Gehäuseunterseite (4b) an der Innenfläche (20) gleitet.

6. Handarbeitsgerät nach einem der vorangegangenen Ansprüche, **dadurch gekennzeichnet, dass** das Stützelement (19) mit einem Fußteil (19b) mit der Welle (8) und/oder mit einem Spannelement (13) für die Frässcheibe (3) und/oder der Frässcheibe (3) verbunden ist, wobei das Spannelement (13) insbesondere als Spannmutter oder als Spannschraube (14) ausgebildet ist, wobei das Stützelement (19) im Betrieb der Frässcheibe (3) insbesondere drehfest gegenüber der Frässcheibe (3) angeordnet ist.

7. Handarbeitsgerät nach einem der vorangegangenen Ansprüche, **dadurch gekennzeichnet, dass** das Stützelement (19) eine Pilzform oder Kugelkappenform oder Ringförm oder Kegelform aufweist.

8. Handarbeitsgerät nach einem der vorangegangenen Ansprüche 1, 2 oder 7, **dadurch gekennzeichnet, dass** das Stützelement (119) an der Innenfläche (20) angeordnet, insbesondere als Stützstreifen (119a) entlang einer Bewegungsbahnen (BWB) der Frässcheibe (3) angeordnet ist.

9. Handarbeitsgerät (1; 101) insbesondere nach Anspruch 1, Handarbeitsgerät (1), insbesondere zum Durchtrennen und/oder Schleifen von Materialien zum Ausbau von im Mauerwerk (MW) eingebauten Fenstern und Türen oder dergleichen, umfassend:
- einen Antriebsmotor (2)
- eine Frässcheibe (3), die mit dem Antriebsmotor (2) über eine Welle (8) verbunden ist,
- ein die Frässcheibe (3) umschließenden Gehäuse (4), welches eine dem Antriebsmotor (2) zugewandte Gehäuseoberseite (4a) und eine dem Antriebsmotor (2) abgewandte Gehäuseunterseite (4b) umfasst,
- mindestens einen Führungsschlitten (5; 6), der mit dem Gehäuse (4) verbunden ist,
- wobei der Antriebsmotor (2) und damit die Frässcheibe (3) über den Führungsschlitten (5; 6) derart in Richtung mindestens einer Austrittsöffnung (10; 11) für die Frässcheibe (3) an dem Gehäuse (4) verschiebbar ist, dass die Frässcheibe (3) zumindest teilweise aus dem Gehäuse (4) zur Durchführung einer Schneid- bzw. Fräsarbeit herausragt,
**dadurch gekennzeichnet,**
- **dass** das Stützelement (19; 119) bei Austritt der Frässcheibe (3) zur vorderen und/oder seitlichen Richtung aus dem Gehäuse (4), die Bodenplatte (4b) beim Ausbau von im Mauerwerk (MW) eingebauten Fenstern und Türen oder dergleichen an einer der Innenfläche (20) zugewandten Oberfläche (F3) der Frässcheibe (3) abstützt.

10. Handarbeitsgerät nach Anspruch 1, **dadurch gekennzeichnet, dass** das Stützelement (19; 119) als einteiliges Stützelement ausgebildet ist oder dass das Stützelement (219) als zweiteiliges Stützelement (219) ausgebildet ist, welches einen Körper (K219) und einen Gleit- und Stützkörper (GS219) umfasst, wobei der Gleit- und Stützkörper (GS219) in einer Tasche (T219) des Körpers (K219) aufgenommen ist und über diesen hervorsteht und insbesondere als Kugel (K) ausgebildet ist.
